# EUROPÄISCHE PATENTANMELDUNG

(11) **EP 1 559 979 A2**
(43) Veröffentlichungstag der Anmeldung: **03.08.2005**
(21) Anmeldenummer: 05100463.8
(22) Anmeldetag: 25.01.2005
(51) Int. Cl.: F26B 17/14, F26B 21/06

(54) **Automatisches Steuern des Trocknens von Schüttgut**

(30) Priorität: 29.01.2004 DE 102004004680
(71) Anmelder: Mann + Hummel ProTec GmbH, 71636 Ludwigsburg (DE)
(72) Erfinder: Zlotos, Michael, 74348 Lauffen (DE)

(57) **Zusammenfassung**

Um eine Möglichkeit zur Verfügung zu stellen, das Trocknen und das Entnehmen des Schüttgutes einander in der Weise zu überlagern, dass eine kontinuierliches Trocknen von Schüttgut auch bei nicht kontinuierlicher Zufuhr zu ermöglichen, sieht die Erfindung vor, in Abhängigkeit von örtlich erfaßte Temperaturen repräsentierenden Signalen (ϑᵢ; hᵢ) von im Schüttgut angebrachten Temperaturfühlern, einer vorgebbaren Verweilzeit (T_{V}) des Schüttgutes bei einer Temperatur innerhalb eines vorgebbaren Solltemperaturbereichs (ϑₘᵢₙ, ϑₘₐₓ) und einem vorgebbaren Durchsatz an getrocknetem Schüttgut die dem Schüttgut zugeführte Wärmemenge derart zu steuern, daß das entnommene Schüttgut mindestens während der Verweilzeit (T_{V}) eine Temperatur innerhalb des Solltemperaturbereichs (ϑₘᵢₙ, ϑₘₐₓ) besaß.

## Beschreibung

Die Erfindung betrifft eine Vorrichtung zum, insbesondere kontinuierlichen, Trocknen von Schüttgut gemäß dem Oberbegriff von Anspruch 1 sowie ein Verfahren zum, insbesondere kontinuierlichen, Bereitstellen von getrocknetem Schüttgut nach Anspruch 13.

Kunststoffe werden für eine Weiterverarbeitung häufig in Form von Granulaten bereitgestellt. Um das Kunststoffgranulat jedoch verarbeiten zu können, darf dieses eine bestimmte Feuchte nicht überschreiten. Deshalb werden Kunststoffgranulate getrocknet. Bei nichthygroskopischen Kunststoffen wird beim Trocknen die Feuchtigkeit entfernt, die an der Oberfläche der Kunststoffe haftet. Bei Granulaten aus hygroskopischen Kunststoffen muß zudem Feuchtigkeit aus den Poren im Inneren eines Granulatkorns entfernt werden.

Trocknersysteme bzw. -vorrichtungen für Schüttgut bestehen gewöhnlich aus einem im wesentlichen zylindrischen und aufrecht stehenden Behälter bzw. Trocknungstrichter, der am obersten Ende eine Beschickungsöffnung für zu trocknendes Schüttgut aufweist und am untersten Ende zu einer verschließbaren Entnahmeöffnung für Schüttgut beispielsweise kegelig zuläuft. In der Nähe der Entnahmeöffnung führt ein Zuführrohr für Trockenluft von einem Trockner in das Innere des zylindrischen Behälters und in der Nähe der Beschickungsöffnung ist ein Abluftrohr vorgesehen. Im Betrieb durchsinkt in den Behälter eingebrachtes Schüttgut, beispielsweise ein Pulver oder ein Kunststoffgranulat oder Pellets aus Kunststoff, den Behälter und wird im Gegenstrom von warmer Trockenluft durchströmt, welche von dem Schüttgut mitgeführte Feuchte aus diesem aufnimmt und als Abluft aus dem Behälter entfernt.

Die Entnahme von (trockenem) Schüttgut richtet sich nach dem Bedarf an trockenem Schüttgut für an die Entnahmeöffnung des Trockners angeschlossenen Schüttgutverarbeitungsmaschinen, die bei Kunststoffen beispielsweise Spritzgußmaschinen oder Extruder sein können. Einerseits muß hierzu im Trockner stets ausreichend getrocknetes Granulat bereitgehalten werden. Andererseits muß eine zu große Verweilzeit des Granulats bei der Solltemperatur oder eine Übertrocknung desselben vermieden werden.

Insbesondere die Trocknung von Granulaten aus hygroskopischen Kunststoffen erfordert einen großen Energieeinsatz, um die Bindung der Feuchtigkeit in den Poren zu überwinden und die Flüssigkeit zu verdampfen, um sie dann über die Gasphase abführen zu können. Dabei ergibt sich die Schwierigkeit, zum einen eine ausreichende Wärmemenge in das zu trocknende Granulat einbringen zu müssen, zum anderen jedoch eine geforderte Restfeuchte des Produkts nach der Trocknung beibehalten zu können. Unter dem Begriff "Übertrocknung" wird zum einen der Effekt angesprochen, daß die Trocknung bis zu einem unterhalb der geforderten Restfeuchte liegenden Wert für die Feuchte des Produkts durchgeführt wurde. Zum anderen erfasst der Begriff "Übertrocknung" den Effekt, dass bei zu großer Verweilzeit bei hohen Temperaturen schädigende Veränderungen des Kunststoffes eintreten können. Diese können beispielsweise chemische Veränderungen sein, welche insbesondere durch Oxidation bei Betrieb der Trocknung mit Luft als Trocknungsmedium verursacht werden können. Dabei sind auch Änderungen der Viskosität des Kunststoffen von großer Bedeutung für die Verarbeitbarkeit in nachfolgenden Apparaten.

Bei der Trocknung von Kunststoff, beispielsweise PET, ist häufig die Entfernung einer relativ geringen Restfeuchte gefordert, welche dem Granulat oder den Pellets anhaftet und/oder in der Schüttung oder im Granulat gebunden ist. Dafür ist es nicht nur erforderlich, daß das Granulat auf eine vorgegebene und von der Art des Kunststoffs abhängige Solltemperatur von beispielsweise 170° C von der Trockenluft aufgewärmt, sondern auch auf dieser Temperatur über eine ebenfalls vorgegebene Verweilzeit gehalten wird.

Aus der deutschen Patentschrift 31 31 471 ist es bekannt, im Hinblick auf die Energiebilanz des Trocknersystems die Menge des Luftdurchsatzes durch den Schüttguttrocknungstrichter bei steigender Ablufttemperatur herabzusetzen und bei sinkender Ablufttemperatur zu erhöhen. Damit soll erreicht werden, daß einem nur mit Teillast gefahrenen Trocknersystem nicht mehr als die zur Trocknung erforderliche Wärme von der Trockenluft zugeführt wird. Dennoch bleibt die Energiebilanz ungünstig, weil praktisch das ganze im Behälter vorhandene Schüttgut erwärmt sein muß, ehe die Ablufttemperatur so weit angestiegen ist, daß der Luftdurchsatz entsprechend erniedrigt wird. Eine unmittelbare Abstimmung auf eine vorgebbare Verweilzeit des Schüttguts innerhalb eines Solltemperaturbereichs ist anhand der DE 31 31 471 nicht möglich.

Die europäische Patentschrift 487 829 zeigt ein Schüttguttrocknersystem, bei dem anstelle der Ablufttemperatur die Temperatur des Schüttgutes durch eine im Behälter angebrachte Temperaturmeßeinrichtung zur Steuerung des Luftmengendurchsatzes durch den Trocknungstrichter erfaßt wird. Liegt die von der Temperaturmeßeinrichtung festgestellte Schüttguttemparatur unterhalb eines vorgegebenen Grenzwertes, kann durch ein von der Temperaturmeßeinrichtung über einen Signalumwandler erzeugtes Warnsignal eine Schüttgutentnahme durch die Entnahmeöffnung des Behälters unterbrochen werden. Bei zu starkem Anstieg der Schüttguttemperatur kann durch den Signalumwandler ein Stellsignal erzeugt werden, welches zu einer Drosselung des Massenstroms an zugeführter Luft führt.

Nachteilig an dieser Anordnung ist jedoch, dass die Rückschlüsse aus einem einzigen Temperaturmesswert auf den Trockungszustand der gesamten Schüttung unzuverlässig sind. Weil der Trocknungszustand nicht in der gesamten Schüttung erfasst werden kann, ist es nicht möglich, sicherzustellen, dass zu entnehmendes Schüttgut die geforderte Restfeuchte hat und nicht übertrocknet wurde.

Die europäische Patentschrift 711 641 beschreibt einen Schüttguttrocknungstrichter, in welchem ein Baum aus mehreren übereinander beabstandeten Temperaturfühlern angeordnet ist, deren Ausgänge an eine einen programmierbaren Mikroprozessor umfassende Signalverarbeitungseinheit angeschlossen sind. Der Mikroprozessor verarbeitet die Temperaturdaten aus den Temperaturfühlern sowie eine eingegebene Information über die Art des zu trocknenden Granulats, die zugehörige Solltemperatur und Verweilzeit sowie den gewünschten Granulatdurchsatz und die Dichte des Granulatmaterials, und bestimmt daraus denjenigen Temperaturfühler, unterhalb welchem das jeweilige Granulat auf die Solltemperatur aufgewärmt sein muß, hinreichend lange bei dieser Temperatur verweilt haben muß und der gewünschte Granulatdurchsatz zur Entnahme bereitsteht.

Der Mikroprozessor gibt die Granulatentnahme erst frei, wenn der ermittelte Temperaturfühler die Solltemperatur signalisiert und die Verweilzeit abgelaufen ist. Nachteilig ist, daß die Schüttguttrocknervorrichtung bei geringerem Granulatbedarf als dem eingestellten Granulatdurchsatz, wenn beispielsweise eine oder mehrere an der Schüttguttrocknervorrichtung angeschlossene Kunststoffverarbeitungsmaschinen abgestellt sind, die Entnahme so lange blockiert, bis der volle Granulatdurchsatz bereitgestellt ist.

Es ist außerdem lediglich vorgesehen, absatzweise eine Trocknung einer Schüttung im Behälter derart durchzuführen, dass die zu entnehmende Menge ausreichend trocken ist. Ein weiterer Nachteil besteht also darin, keinen kontinuierlichen Prozess fahren zu können, da ein überlagertes Trocknen und Entnehmen des Schüttgutes nicht angedacht ist.

Der Erfindung liegt daher die Aufgabe zugrunde, die Bedienung des Schüttguttrocknersystems zu vereinfachen und Wartezeiten bis zur Freigabe der Granulatentnahme zu verkürzen.

Es ist eine weitere Aufgabe der Erfindung, eine Möglichkeit zur Verfügung zu stellen, Schüttgut beim Durchlaufen eines Behälters bzw. Trocknungstrichters zu trocknen und das den Behälter durchlaufende Schüttgut am Ende sofort entnehmen zu können, also das Trocknen und das Entnehmen des Schüttgutes einander in der Weise zu überlagern, dass eine kontinuierliche Fahrweise ermöglicht wird.

Es ist ferner eine Aufgabe der Erfindung, insbesondere für einen kontinuierlichen Betrieb eines Schüttguttrocknersystems, eine Möglichkeit zur Verfügung zu stellen, das zuverlässige Erreichen einer vorgebbaren Restfeuchte sicherzustellen und gleichzeitig zu vermeiden, dass das Schüttgut beim Durchlauf durch den Behälter übertrocknet wird.

Diese Aufgaben werden auf überraschend einfache Weise bereits mit einer Vorrichtung nach Anspruch 1 gelöst. des Weiteren löst die Erfindung die genannten Aufgaben mit einem Verfahren nach Anspruch 12. Vorteilhafte Weiterbildungen finden sich in den jeweils zugeordneten Unteransprüchen.

Die Erfindung stellt damit erstmals eine Vorrichtung zum, insbesondere kontinuierlichen, Trocknen von Schüttgut, insbesondere Kunststoffgranulat, in einem Behälter bzw. einem Trocknungstrichter sowie zur, insbesondere kontinuierlichen, Entnahme von getrocknetem Schüttgut aus dem Behälter zur Verfügung, und zwar mit einer Einrichtung zum Zuführen von feuchtem Schüttgut, einer Einrichtung zum Abführen von Schüttgut, einer Einrichtung zum Zuführen von erwärmtem Gas zu dem Behälter und einer Einrichtung zum Abführen von Gas aus dem Behälter, so daß das Gas das Schüttgut durchströmt, wenigstens zwei in unterschiedlichen vertikalen Positionen (hᵢ) im Behälter angebrachten Temperaturfühlern, sowie mit einer Steuereinrichtung, wobei die Steuereinrichtung derart ausgebildet ist, daß sie in Abhängigkeit von die örtlich erfaßten Temperaturen repräsentierenden Signalen (ϑᵢ; hᵢ) der Temperaturfühler, einer vorgebbaren Verweilzeit (T_{V}) des Schüttgutes bei einer Temperatur innerhalb eines vorgebbaren Solltemperaturbereichs (ϑₘᵢₙ, ϑₘₐₓ) und einem bestimmbaren Durchsatz an getrocknetem Schüttgut die dem Schüttgut zugeführte Wärmemenge derart steuert, daß das entnommene Schüttgut mindestens während der Verweilzeit (T_{V}) eine Temperatur innerhalb des Solltemperaturbereichs (ϑₘᵢₙ, ϑₘₐₓ) besaß.

Unter dem Begriff "Wärmemenge" wird dabei die innerhalb eines Zeitintervalls, beispielsweise der Verweilzeit, dem Schüttgut über den Wärmestrom Q̇, welcher dem Produkt aus dem Mengenstrom eines zur Trocknung benutzten Gases und der Temperaturdifferenz zwischen der Temperatur dieses Gases und dem Schüttgut proportional ist, zugeführte Energie verstanden.

Damit ermöglicht die Erfindung vorteilhafterweise die kontinuierliche Entnahme von Schüttgut mit einem gewünschten Volumenstrom, wobei sichergestellt ist, daß das Schüttgut auf die gewünschte Restfeuchte getrocknet ist. Zudem kann mit der Erfindung der Vorteil realisiert werden, daß das entnommene Schüttgut bei jedem Durchsatz, auch wenn dieser während des Betriebs der Vorrichtung geändert wird oder unbeabsichtigt schwankt, im Wesentlichen stets mindestens während der Verweilzeit (T_{V}) eine Temperatur innerhalb des Solltemperaturbereichs (ϑₘᵢₙ, ϑₘₐₓ) besaß.

Ein weiterer Vorteil der Erfindung liegt darin, dass eine vorgegebene Verweilzeit im Solltemperaturbereich realisiert werden kann, ohne dass eine Änderung der Austrittstemperatur des Kunststoffes aus dem Trocknertrichter erfolgt. Damit kann selbst bei Anpassung der Betriebsparameter im Rahmen der Erfindung sichergestellt werden, dass der getrocknete Kunststoff mit einer unveränderten Temperatur in nachgeschaltete Apparate eintritt.

Je nach Anwendungsfall kann dafür eine Verweilzeit in einem Solltemperaturbereich vorgegeben werden, bei welcher die gewünschte Restfeuchte erreicht ist. Im Regelfall ist durch Wahl des Materials bereits implizit die Verweilzeit und Solltemperatur mit erfasst, denn die für eine Trocknung auf eine bestimmte Restfeuchte erforderlichen Verweilzeiten in einem Solltemperaturbereich werden von den Herstellern der Kunststoffe mitgeteilt. Beispielsweise können auf den als Vorlagebehälter nutzbaren Gebinden in Gestalt von Barcodes die relevanten Daten angegeben sein und von einer entsprechenden Einrichtung im Rahmen der Erfindung erfaßt und zur Weiterverarbeitung zur Verfügung gestellt werden. Ist dies nicht der Fall, kann die Verweilzeit T_{V} in einfacher Weise in einem Vorversuch ermittelt werden, wenn sie nicht aus Erfahrung bekannt ist.

Der Begriff "Durchsatz" wird in Bezug auf das Schüttgut in gleicher Bedeutung wie "Mengenstrom" verwendet, wobei der Begriff "Mengenstrom" sowohl Massen- als auch Volumenstrom bedeuten kann, je nachdem, ob die verwendeten Größen auf die Masse oder das Volumen bezogen sind. Der Durchsatz ist bestimmbar, das bedeutet, ein Wert für den Durchsatz kann vorgegeben oder durch Messung ermittelt werden.

Wird das Trocknersystem derart betrieben, daß unterschiedliche zu trocknende Materialien in mehreren Vorlagebehältern bereitgestellt werden, ist erfindungsgemäß vorgesehen, eine Einrichtung zur Verfügung zu stellen, mit welcher die zum jeweiligen Material gehörenden Werte für die Verweilzeit T_{V} und die Grenzen des Solltemperaturbereichs (ϑₘᵢₙ, ϑₘₐₓ) vorgegeben werden können. Unterschiedliche Einstellungen für die jeweiligen zu trocknenden Materialien können daher vorteilhafterweise durch die Vorrichtung selbsttätig gefahren werden.

Im übrigen liegt es im Rahmen der Erfindung, für den jeweiligen Anwendungsfall erforderliche Einrichtungen der erfindungsgemäßen Vorrichtung derart mehrfach vorzusehen, daß in mehreren Vorlagebehältern bereitgestellte, insbesondere verschiedene Schüttgüter mit einem Trockner getrocknet werden können, wobei die Einstellungen für die Fahrweise des Trocknersystems und/oder einzelner Trocknungstrichter für das jeweilige Material entsprechend den Ausführungen in Bezug auf ein Granulat ermittelt werden.

Mit der erfindungsgemäßen Vorrichtung wird dabei der Vorteil realisiert, die Produkteigenschaft der Restfeuchte des zu entnehmenden Schüttgutes zuverlässig mit den Betriebsparametern der Verweilzeit und dem Solltemperaturbereich zu koppeln. Die zugeführte Wärmemenge beeinflußt neben dem Strömungsprofil des den Behälter durchsinkenden Schüttgutes direkt die Temperaturverteilung im Behälter bzw. Trocknungstrichter, während die Produkteigenschaft der Restfeuchte des zu entnehmenden Schüttgutes nur mittelbar mit der zugeführten Wärmemenge zusammenhängt.

Die Erfindung sieht daher vor, beim Betrieb der Vorrichtung direkt die Temperaturverteilung entlang des Behälters, welche das Schüttgut erfährt, zu messen. Die Temperatur kann auf einfache Weise gemessen werden, es stehen eine Vielzahl von Temperaturmeßsonden für unterschiedlichste Anforderungen zur Verfügung. Die Meßgrößen und die zur Steuerung herangezogenen Sollwerte in Form von Temperaturwerten sind erfindungsgemäß dieselbe Art von Parameter. Die Erfindung ermöglicht so auf besonders einfache Weise eine zuverlässige Steuerung des Trocknens von Schüttgut.

Die erfindungsgemäße Vorrichtung kann ferner eine Einrichtung zum Vorgeben des Durchsatzes an getrocknetem Schüttgut umfassen. Wird für den jeweiligen Anwendungsfall das Einhalten eines bestimmten Wertes für den Durchsatz gefordert, besteht somit eine einfache Möglichkeit, diesen Wert für die Weiterverarbeitung im Rahmen der Erfindung zur Verfügung zu stellen.

Die Vorrichtung kann des Weiteren eine Einrichtung zum Messen des Durchsatzes von getrocknetem Schüttgut umfassen. Für eine derartige Messung können alle dem Fachmann bekannten Möglichkeiten herangezogen werden. Beispielsweise kann eine Messung des Durchsatzes an getrocknetem Schüttgut durch den Einsatz von Wägezellen zum Ermitteln des Gewichtsverlaufs im Trocknertrichter, durch die Messung der Fördermenge an getrocknetem Schüttgut oder mit Hilfe einer Kopplung mit der Vorrichtung nachgeschalteten Verarbeitungsapparaten, zum Beispiel mit deren Durchsatz bei stationärem Betrieb, durchgeführt werden.

Durch das Messen des abgeführten Mengenstroms von getrocknetem Schüttgut kann vorteilhafterweise ein weiterer Parameter zur Verfügung gestellt werden, wodurch eine Abstimmung des Betriebs der Vorrichtung auf den Bedarf an getrocknetem Schüttgut möglich wird. Dazu kann die Vorrichtung insbesondere eine Einrichtung zum Regeln oder Steuern des abgeführten Mengenstroms von getrocknetem Schüttgut aufweisen.

Die Vorrichtung kann des Weiteren eine Einrichtung zum Messen des zugeführten Mengenstroms von feuchtem Schüttgut aufweisen. Unter dem Begriff "Menge" kann im Rahmen der vorliegenden Schrift sowohl die Masse als auch das Volumen betrachtet werden, je nach dem Meßprinzip der Meßeinrichtung. Durch das Messen des zugeführten Mengenstroms von feuchtem Schüttgut kann vorteilhafterweise ein weiterer Parameter zur Verfügung gestellt werden, wodurch eine Abstimmung des Betriebs der Vorrichtung auf die Zufuhr von zu trocknendem Schüttgut möglich wird. Dazu kann die Vorrichtung insbesondere eine Einrichtung zum Regeln oder Steuern des zugeführten Mengenstroms von feuchtem Schüttgut umfassen.

In einer weiteren vorteilhaften Ausgestaltung der Erfindung kann die Vorrichtung eine Einrichtung zum Bereitstellen des Gases umfassen. So kann mit der Vorrichtung selbst ein Medium für die Wärmezufuhr zur Verfügung gestellt werden, so daß die Vorrichtung unabhängig davon betrieben werden kann, ob am Einsatzort Gas bereitgestellt werden kann. Die Erfindung bietet damit den Vorteil weitgehender Flexibilität beim Einsatz der Vorrichtung.

Zudem kann die Vorrichtung eine Einrichtung zum Messen des zugeführten Mengenstroms von erwärmtem Gas aufweisen. Somit wird die Voraussetzung für eine Dosierung des zugeführten Mengenstroms von erwärmtem Gas geschaffen.

Die Vorrichtung kann des Weiteren eine Einrichtung zum Regeln oder Steuern des zugeführten Mengenstroms von erwärmtem Gas aufweisen. Mit der gezielten Zufuhr eines vorbestimmbaren Mengenstroms von erwärmtem Gas wird damit eine Möglichkeit geschaffen, den der Vorrichtung zugeführten Wärmestrom und damit die der Vorrichtung zugeführte Wärmemenge zu steuern.

Insbesondere in solchen Fällen, wenn die Möglichkeit zum Erhöhen der Gaseintrittstemperatur (ϑ_{Gas,ein}), beispielsweise wegen zu befürchtender Produktschädigungen bei weiterer Temperaturerhöhung, nicht besteht, muß der zugeführte Mengenstrom von erwärmtem Gas erhöht werden, um die erforderliche Wärmemenge für die gewünschte Trocknung bereitzustellen.

Eine Anpassung des zugeführten Mengenstroms von erwärmtem Gas kann im Hinblick auf eine effiziente Nutzung der umgesetzten Energie auch dann wünschenswert sein, wenn die Temperatur des den Trocknungstrichter verlassenden Gases deutlich über der Umgebungstemperatur liegt. Die Differenz zwischen der Temperatur des den Trocknungstrichter verlassenden Gases und der Umgebungstemperatur ist in diesem Fall proportional zu einer Wärmemenge, die für die Trocknung zur Verfügung gestanden hätte, jedoch ungenutzt dissipiert.

Um solche Fälle zu vermeiden, kann im Rahmen der Erfindung das Grundprinzip gemäß der DE 31 31 471 genutzt werden, im Hinblick auf die Energiebilanz des Trocknerssystems die Menge des Gasdurchsatzes durch den Schüttguttrocknungstrichter bei steigender Ablufttemperatur herabzusetzen und bei sinkender Ablufttemperatur zu erhöhen.

Die Vorrichtung kann ferner eine Einrichtung zum Beheizen des zuzuführenden Gases umfassen, um einen gewünschten Temperaturgradienten zwischen Gas und Schüttgut erzeugen zu können und so die Wärmeübertragung vom Gas auf das Schüttgut zu ermöglichen. Mit dem gezielten Einstellen eines vorbestimmbaren Temperaturgradienten zwischen Gas und Schüttgut wird damit eine zweite Möglichkeit geschaffen, den der Vorrichtung zugeführten Wärmestrom und damit die der Vorrichtung zugeführte Wärmemenge zu steuern.

Zudem kann die Vorrichtung eine Einrichtung zum Messen der Temperatur des zugeführten erwärmtem Gases (ϑ_{Gas,ein}) aufweisen. Durch das Messen der Temperatur des zugeführten erwärmtem Gases (ϑ_{Gas,ein}) kann vorteilhafterweise ein weiterer Parameter zur Verfügung gestellt werden, wodurch eine Abstimmung des Temperaturgradienten zwischen Gas und Schüttgut möglich wird. Dazu kann die Vorrichtung insbesondere eine Einrichtung zum Regeln oder Steuern der Temperatur des zugeführten erwärmtem Gases (ϑ_{Gas,ein}) umfassen.

Die Erfindung stellt des Weiteren ein Verfahren zum, insbesondere kontinuierlichen, Bereitstellen von getrocknetem Schüttgut, zur Verfügung, welches folgende Schritte umfaßt
a) Anordnen von zumindest zwei Temperaturmeßsonden an unterschiedlichen vertikalen Positionen (hᵢ) in einem Behälter,
b) Bereitstellen von Werten (hᵢ) für die Positionen der Temperaturmeßsonden,
c) Bereitstellen eines Wertes für die vom Schüttgut durchströmte Querschnittsfläche (A) im Behälter,
d) Vorgeben eines Solltemperaturbereichs (ϑₘᵢₙ, ϑₘₐₓ),
e) Vorgeben eines Wertes für die Verweilzeit (T_{V}) des Schüttgutes bei einer Temperatur innerhalb eines vorgebbaren Solltemperaturbereichs (ϑₘᵢₙ, ϑₘₐₓ),
f) Bestimmen eines Wertes für den Volumenstrom an zu entnehmendem getrockneten Schüttgut,
g) Zuführen von Schüttgut in den Behälter,
h) Zuführen von erwärmtem Gas in und Abführen von Gas aus dem Behälter derart, daß das Gas das Schüttgut durchströmt,
i) Messen der Temperatur in Abhängigkeit von der Höhe im Schüttgut an jeder Position (ϑᵢ(hᵢ)),
j) Ermitteln der Position (h(ϑₘᵢₙ)), an welcher die Temperaturuntergrenze des Solltemperaturbereichs (ϑₘᵢₙ) vorliegt,
k) Ermitteln der Position (h(ϑₘₐₓ)), an welcher die Temperaturobergrenze des Solltemperaturbereichs (ϑₘₐₓ) vorliegt,
l) Ermitteln der vertikalen Distanz (H) zwischen den in den Schritten j) und k) ermittelten Positionen (h(ϑₘᵢₙ), h(ϑₘₐₓ)),
m) Ermitteln der Verweilzeit (t_{V}) im Solltemperaturbereich (ϑₘᵢₙ, ϑₘₐₓ),
n) Überprüfen, ob die Verweilzeit (t_{V}) gleich oder größer als die vorgegebenen Verweilzeit (T_{V}) ist,
o) Entnehmen von Schüttgut mit vorgegebenem Volumenstrom, wenn die Verweilzeit (V_{V}) größer als die oder gleich der vorgegebenen Verweilzeit (T_{V}) ist.

Das erfindungsgemäße Verfahren ermöglicht vorteilhafterweise die kontinuierliche Entnahme von Schüttgut mit einem gewünschten Volumenstrom, wobei sichergestellt ist, daß das Schüttgut auf die gewünschte Restfeuchte getrocknet ist. Die Steuerung der Wärmemenge in Abhängigkeit von dem gemessenen Temperaturprofil und dessen Umrechnung in eine Verweilzeit t_{V} in einem vorgebbaren Solltemperaturbereich ermöglicht auf höchst überraschend einfache Weise, zuverlässig eine ausreichende Trocknung des Schüttguts bei der Trocknung überlagerter Entnahme sicherzustellen.

Zum Bestimmen eines Wertes für den Volumenstrom an zu entnehmendem getrockneten Schüttgut kann der Volumenstrom an zu entnehmendem getrockneten Schüttgut zum einen gemessen werden. Zum anderen liegt es im Rahmen der Erfindung, daß zum Bestimmen des Volumenstroms an zu entnehmendem getrockneten Schüttgut ein Wert vorgegeben wird. Die Erfindung bietet damit vorteilhafterweise die Möglichkeit, flexibel auf Anforderungen des gegebenen Anwendungsfalls eingehen zu können.

Im Rahmen des erfindungsgemäßen Verfahrens kann zudem eine Mindestfüllhöhe (hₘᵢₙ) vorgegeben werden. Damit wird vorteilhafterweise ein Parameter zur Verfügung gestellt, anhand dessen ein drohendes Leerlaufen der Vorrichtung detektiert werden kann.

Ist es im Hinblick auf die Produktqualität erforderlich, daß sich ein stationäres Strömungsverhalten des den Behälter bzw. Trocknungstrichter durchsinkenden Schüttgutes einstellen kann, kann die Mindestfüllhöhe hₘᵢₙ auf einen Wert festgelegt werden, welcher nur unwesentlich unterhalb der Gesamtfüllhöhe des Behälters liegt. Dann ist der Behälter während des Betriebs im wesentlichen immer voll, so daß Schwankungen im Strömungsverhalten der Kunststoffgranulatkörper weitestgehend vermieden werden können. Dadurch bleibt der Wärmeübergang auf das Granulat während der Dauer des Betriebs zeitlich nahezu unverändert, so daß Schwankungen im Trocknungsverlauf der Granulatpartikel, die die Vorrichtung zu unterschiedlichen Zeiten getrocknet verlassen, im wesentlichen ausgeschlossen werden können.

Insbesondere kann dann, wenn die Verweilzeit (t_{V}) kleiner als die vorgegebene Verweilzeit (T_{V}) ist, überprüft werden, ob die Position, an welcher die Temperaturuntergrenze des Solltemperaturbereichs vorliegt (h(ϑₘᵢₙ)), größer als die Mindestfüllhöhe (hₘᵢₙ) ist. Ist die Verweilzeit (t_{V}) kleiner als die vorgegebene Verweilzeit (T_{V}), ist die Strecke H zu kurz, welche bei Temperaturen innerhalb des Solltemperaturbereichs zurückgelegt wird. Um die Strecke H zu vergrößern, muß eine größere Wärmemenge an das Schüttgut abgegeben werden. Dies ist aber nur dann sinnvoll, wenn eine ausreichende Menge an Schüttgut überhaupt zur Verfügung steht, also die Position, an welcher die Temperaturuntergrenze des Solltemperaturbereichs vorliegt (h(ϑₘᵢₙ)), nicht bereits kleiner als die Mindestfüllhöhe (hₘᵢₙ) ist.

Um im Fall einer kleineren Verweilzeit (t_{V}) als die vorgegebene Verweilzeit (T_{V}) die Strecke H zu vergrößern, also eine größere Wärmemenge an das Schüttgut abgeben zu können, und dabei Randbedingungen derart einzuhalten, daß ein sicherer Betrieb gewährleistet bleibt, kann dann, wenn die Position, an welcher die Temperaturuntergrenze des Solltemperaturbereichs vorliegt (h(ϑₘᵢₙ)), kleiner als die Mindestfüllhöhe (hₘᵢₙ) ist, überprüft werden, ob die Produktion beendet werden soll und, wenn ja, die Entnahme von Schüttgut beendet wird. So wird eine einfache Möglichkeit zur Verfügung gestellt, den Betrieb abzufahren.

Dann, wenn die Produktion nicht beendet werden soll, kann der Volumenstrom des in den Behälter zugeführten Schüttgutes erhöht werden und das erfindungsgemäße Verfahren bei Schritt i) fortgesetzt werden. Die Abfrage hat dann dazu gedient, ein drohendes Leerlaufen des Behälters zu detektieren und dem entgegenzuwirken, so daß vorteilhafterweise weiter ein kontinuierlicher Betrieb aufrecht erhalten werden kann.

Um die Sicherheit des Betriebs zu gewährleisten und eine Schädigung des Schüttgutes durch zu hohe thermische Belastung weitestgehend vollständig zu vermeiden, kann ein maximal zulässiger Wert für die Temperatur (ϑ_{Gas,max}) des zugeführten erwärmten Gases vorgegeben werden.

Eine zu hohe thermische Belastung des Schüttgutes ist vor allem deswegen besonders kritisch, weil sie in lokal begrenzten Bereichen auftreten kann und deshalb die Gefahr besteht, daß sie durch die gemessenen Temperaturwerte nicht erfaßt wird. Daher ist es großer Vorteil im Hinblick auf eine hohe Produktqualität und das Erfüllen hoher Sicherheitsanforderungen, daß durch die Erfindung bereits durch die Einstellung der Betriebsparameter dafür gesorgt wird, daß ein Auftreten thermischer Belastung nahezu ausgeschlossen wird.

Die Temperatur (ϑ_{Gas,ein}) des zugeführten erwärmten Gases kann im Rahmen des erfindungsgemäßen Verfahrens gemessen werden, um vorteilhafterweise einen Parameter zur Verfügung zu stellen, anhand dessen eine drohende übermäßige thermische Belastung des Schüttguts detektiert werden kann.

Damit wird die Voraussetzung dafür geschaffen, dann, wenn die Position, an welcher die Temperaturuntergrenze des Solltemperaturbereichs vorliegt (h(ϑₘᵢₙ)), größer als die Mindestfüllhöhe ist, zu überprüfen, ob die Temperatur (ϑ_{Gas,ein}) des zugeführten erwärmten Gases kleiner ist als der maximal zulässige Wert für die Temperatur (ϑ_{Gas,max}) des zugeführten erwärmten Gases. Nur in diesem Fall ist eine Erhöhung der Heizleistung zu vertreten. Somit bietet die Erfindung durch eine weitere Abfrage bei der Durchführung des Verfahrens eine einfache und zuverlässige Möglichkeit, die Sicherheit zu erhöhen und eine hohe Produktqualität zu gewährleisten.

Insbesondere kann dann, wenn die Temperatur (ϑ_{Gas,ein}) des zugeführten erwärmten Gases kleiner ist als der maximal zulässige Wert für die Temperatur (ϑ_{Gas,max}) des zugeführten erwärmten Gases, das zugeführte erwärmte Gas auf eine höhere Temperatur erwärmt und das Verfahren bei Schritt i) fortgesetzt werden.

Wenn jedoch die Temperatur (ϑ_{Gas,ein}) des zugeführten erwärmten Gases größer als der oder gleich dem maximal zulässigen Wert für die Temperatur (ϑ_{Gas,max}) des zugeführten erwärmten Gases ist, besteht die Gefahr einer Übertrocknung der Schüttung. Daher sieht die Erfindung für diesen Fall vor, den Mengenstrom des zugeführten erwärmten Gases zu reduzieren und auf diese Weise eine kleinere Wärmemenge in die Schüttung einkoppeln zu können, so daß das Verfahren bei Schritt i) fortgesetzt werden kann.

Nachfolgend wird die Erfindung anhand von Ausführungsbeispielen in Bezug auf die beigefügten Zeichnungen erläutert. Dieselben Bauteile sind auf allen Zeichnungen mit denselben Bezugszeichen versehen. Es zeigen
- Fig. 1: eine schematische Darstellung der Vorrichtung zum Trocknen von Schüttgut in einer Prinzipskizze,
- Fig. 2: eine schematische Darstellung der Vorrichtung zum Trocknen von Schüttgut in Frontalansicht und Aufsicht zur Erläuterung des Funktionsprinzips mit einer schematischen Darstellung zweier beispielhafter Trocknungsverlaufskurven,
- Fig. 3: eine schematische Darstellung eines Flussdiagramms bezüglich des Ablaufs des erfindungsgemäßen Verfahrens gemäß einem ersten Ausführungsbeispiel,
- Fig. 4: eine schematische Darstellung eines Flussdiagramms bezüglich des Ablaufs des erfindungsgemäßen Verfahrens gemäß einem zweiten Ausführungsbeispiel.

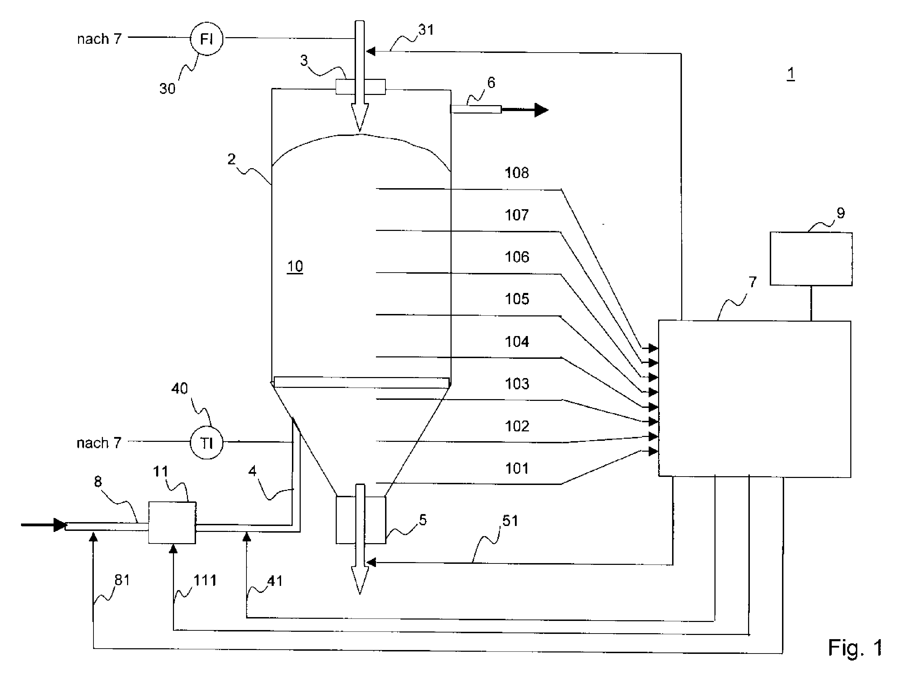

Die Vorrichtung 1 zum Trocknen von Schüttgut weist einen im wesentlichen zylindrischen und aufrecht stehenden Behälter bzw. Trocknungstrichter 2 auf, der am oberen Ende eine Beschickungsöffnung 3 für das Einfüllen von zu trocknendem Schüttgut 10 und am unteren, kegelig zulaufenden Ende eine verschließbare Entnahmeöffnung 5 besitzt. Die Anordnung ist in Fig. 1 dargestellt. Unterhalb der Entnahmeöffnung kann eine Fördereinrichtung zur Weiterleitung des entnommenen Granulats an eine oder mehrere nachgeschaltete Verarbeitungsmaschinen angeordnet sein. In den unteren Teil des Behälters 2 mündet in dessen Inneres ein Zuführrohr 4 für Gas, welches zur Aufnahme der Feuchte aus dem Schüttgut benutzt wird, beispielsweise trockene, warme Trockenluft von beispielsweise 80° C, welche den Behälter über ein oben am Behälter 2 angebrachtes Abluftrohr 6 verlassen kann.

Der Vorrichtung 1 zum Trocknen von Schüttgut ist eine Steuereinrichtung 7 fest zugeordnet, die einen Mikroprozessor, einen programmierbaren Speicher und eine Eingabevorrichtung 9 aufweist. In dem Speicher ist das Ablaufprogramm für den Betrieb der Vorrichtung 1 enthalten. Der Speicher ist mit der Eingabevorrichtung 9 derart gekoppelt, daß der Ablauf des Programms entsprechend der eingegebenen Information modifiziert werden kann. Im Speicher können die geometrischen Daten des Behälters 2, also etwa sein Durchmesser, aus dem sich die vom Schüttgut durchströmte Fläche A gegebenenfalls ermitteln lässt, seine Höhe, nähere Dimensionsangaben über den kegeligen Teil des Behälters 2 und dergleichen gespeichert und vom Mikroprozessor abgerufen werden.

Desgleichen können über die Eingabevorrichtung 9 Daten in die Steuereinrichtung 7 eingegeben werden, welche diese als Randwerte für die jeweils durchzuführende Trocknung verwerten kann. Derartige Daten können eine vorgebbare Verweilzeit Tᵥ, ein gewünschter Durchsatz V̇_{P,aus}, der gewünschte Solltemperaturbereich (ϑₘᵢₙ; ϑₘₐₓ), die Mindestfüllhöhe hₘᵢₙ, Werte für die Positionen hᵢ sein.

Das Zusammenwirken der genannten Teile der Steuereinrichtung 7 sowie deren notwendige Verbindung untereinander ergeben sich aus der folgenden Darstellung der einzelnen Betriebsphasen.

Wenn, wie dargestellt der Behälter 2 mit zu trocknendem Granulat 10 gefüllt ist, wird erwärmtes Gas über das Zuführrohr 4 in den Behälter 2 eingeleitet. Im Folgenden wird als Beispiel für das Gas Luft betrachtet und daher auch der Begriff "Trockenluft" benutzt. Die Trockenluft durchströmt die Granulatschüttung im Behälter nach oben, erwärmt das Granulat, nimmt dabei Feuchte aus der Granulatschüttung unter Abkühlung auf und verläßt den Behälter 2 durch das Abluftrohr 6.

Die Vorrichtung 1 umfasst Temperaturmesssonden, die in unterschiedlichen vertikalen Positionen im Behälter 2 angeordnet sind. In Figur 1 sind für das gezeigte Ausführungsbeispiel acht Temperaturfühler 101, 102, 103, 104, 105, 106, 107 und 108 eingezeichnet, welche in die Granulatschüttung 10 hineinragen. Mit Hilfe der Temperaturfühler 101 bis 108 kann an den jeweiligen vertikalen Positionen hᵢ die Temperatur in der Schüttung gemessen werden. Während des Betriebs der Vorrichtung 1 stellt sich ein Temperaturprofil in der Schüttung 10 ein, welches in Form von Signalen (ϑi; hi) der Temperaturfühler detektiert werden kann. Die Signale (ϑi; hi) der Temperaturfühler 101 bis 108 werden an die Steuereinrichtung 7 weitergeleitet.

Über eine Messeinrichtung 30 kann der Volumenstrom V̇_{P,ein} an dem Behälter zugeführtem Granulat gemessen werden. Der gemessene Wert des Volumenstroms V̇_{P,ein} wird ebenfalls an die Steuereinrichtung 7 weitergeleitet. Über eine Messeinrichtung 40 kann die Temperatur ϑ_{Gas,ein} des dem Behälter zugeführten Gases gemessen werden. Der gemessene Wert für die Temperatur ϑ_{Gas,ein} wird ebenfalls an die Steuereinrichtung 7 weitergeleitet.

Unter Hinzuziehung der über die Eingabevorrichtung 9 eingebbaren Daten kann die Steuereinrichtung 7 die eingespeisten Signale der Temperaturfühler, welche die örtlich erfassten Temperaturen repräsentieren (ϑi; hi,) sowie die Messwerte von den Messeinrichtungen 30 und 40 derart weiter verarbeiten, dass Steuersignale ermittelt werden können, mit welchen der kontinuierliche Betrieb der Vorrichtung 1 zum Trocknen von Schüttgut kontinuierlich im Rahmen der gewünschten Parameter zuverlässig aufrechterhalten werden kann.

Das Steuersignal zum Steuern des der Vorrichtung 1 zugeführten Volumenstroms V̇_{P,ein} kann über eine Leitung 31 an die Zuführung des Schüttguts gesendet werden. Über eine Leitung 81 kann ein von der Steuereinrichtung 7 ermitteltes Signal zur Steuerung der Menge an der Vorrichtung 1 zugeführten Gases zur Gaszufuhr geleitet werden.

Über eine Leitung 111 kann ein von der Steuereinrichtung 7 ermitteltes Signal zur Steuerung der Heizleistung an eine Vorrichtung 11 zum Beheizen des dem Behälter 2 zuzuführenden Gases weitergeleitet werden. Die Vorrichtung 11 zum Beheizen des dem Behälter 2 zuzuführenden Gases ist im gezeigten Ausführungsbeispiel in der Zuführleitung 8 für das Gas angeordnet.

Über eine Leitung 41 kann ein von der Steuereinrichtung 7 ermitteltes Signal ferner zur Steuerung des Mengenstroms an dem Behälter 2 zuzuführendem Gas an eine nicht dargestellte Einrichtung, welche zumindest zum Einstellen des Mengenstroms an dem Behälter 2 zuzuführendem Gases ausgebildet ist, weitergeleitet werden. Über eine Leitung 51 kann ein von der Steuereinrichtung 7 ermitteltes Signal an die Entnahme des Schüttguts aus dem Behälter 2 weitergeleitet werden. Unter Ansprechen auf das über die Leitung 51 ermittelte Signal kann insbesondere die Entnahmeöffnung 5 geschlossen werden.

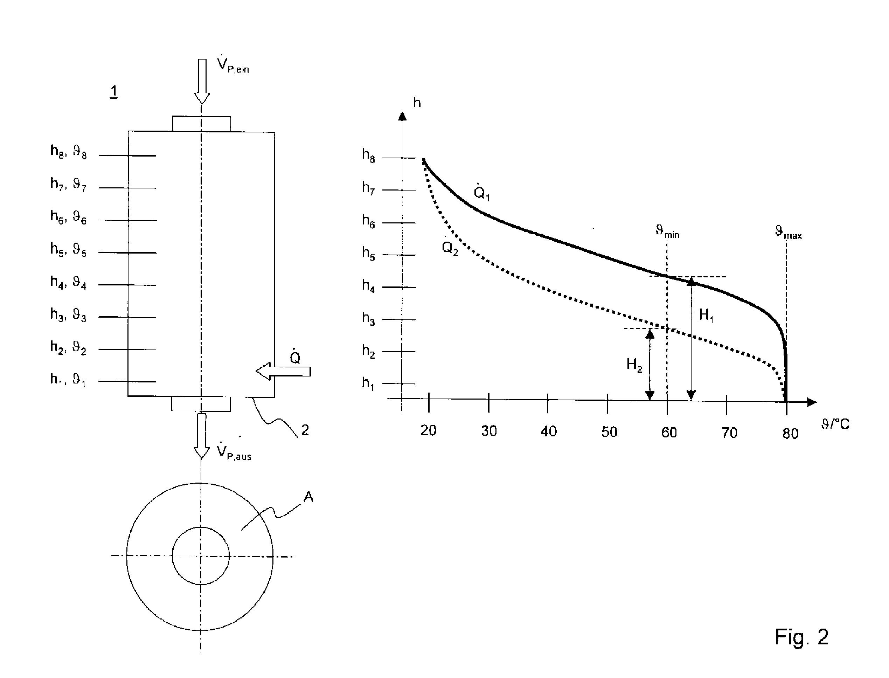

Anhand der Darstellungen in Figur 2 wird die Funktionsweise der Erfindung deutlich. Auf der linken Seite ist der Behälter 2 schematisch dargestellt, in welchen ein Volumenstrom V̇_{P,ein} an Schüttgut zugeführt und aus welchem ein Volumenstrom V̇_{P,aus} an Schüttgut abgeführt wird. Dem Behälter wird ein Wärmestrom *Q̇* zugeführt. In dem Behälter sind, wie oben erläutert, Temperaturmesssonden angebracht, von denen acht gezeigt sind. Mit jeder Temperaturmesssonde wird eine Wertepaar für die örtlich erfasste Temperatur ermittelt. Jeder Temperaturfühler liefert damit ein Signal, welches eine Information über den jeweiligen Ort des Temperaturfühlers hᵢ sowie über die an diesem Ort hᵢ gemessene Temperatur ϑᵢ enthält. Im gezeigten Ausführungsbeispiel sind daher an den Temperaturfühlern die entsprechenden Wertepaare (h₁; ϑ₁), (h₂; ϑ₂) bis (h₈; ϑ₈) angegeben. Aus den ermittelten Werteparen kann ein Temperaturprofil in vertikaler Richtung durch den Behälter 2 ermittelt werden.

Eine solche Auftragung ist im Diagramm auf der rechten Seite in Figur 2 für zwei unterschiedliche Wärmeströme *Q̇*₁ und *Q̇*₂ gezeigt. Aufgetragen ist die vertikale Position h über der Temperatur ϑ in Grad Celsius. Zunächst wird die durch die durchgezogene Linie dargestellte Kurve für den Wärmestrom Q̇₁ betrachtet. Im betrachteten Beispiel sei angenommen, dass das Gas mit einer Eingangstemperatur ϑ_{Gas,ein} von 80°C bei einer Höhe h = 0 in den Behälter 2 eintritt. Beim Durchströmen der Schüttung im Behälter 2 kühlt sich das Gas auf eine Temperatur 20°C ab, die bei der Höhe h₈ detektiert wird. Die Trocknungsverlaufskurve erstreckt sich daher zwischen den Werten (h = 0; 80°C) und (h₈; 20°C).

Im Rahmen der Erfindung kann ein Solltemperaturbereich (ϑ_{min;} ϑₘₐₓ) vorgegeben werden, innerhalb dessen das Schüttgut eine ebenfalls vorgebbare Verweilzeit T_{V} verweilen soll. Im betrachteten Beispiel sei angenommen, dass die untere Grenze des Solltemperaturbereichs ϑₘᵢₙ bei 60°C und die obere Grenze des Solltemperaturbereichs ϑₘₐₓ bei 80°C liegt. Beide Grenzen sind in Form gestrichelter Linien im Diagramm eingezeichnet.

Aus der aus den die örtlich erfassten Temperaturen repräsentierenden Signale (ϑi; hi) der Temperaturfühler berechneten Trocknungsverlaufskurve kann somit eine Abmessung H für die vom Schüttgut bei einer Temperatur innerhalb des vorgegebenen Solltemperaturbereichs (ϑₘᵢₙ, ϑₘₐₓ) zurückgelegte Strecke ermittelt werden.

Die Höhe, bei welcher die Temperatur ϑₘᵢₙ herrscht, ist durch eine waagerechte, gestrichelte Linie, welche die Trocknungsverlaufskurve für den Wärmestrom *Q̇*₁ schneidet, eingezeichnet. Die Temperatur ϑₘₐₓ liegt bei einer Höhe von h = 0 vor, da sie im betrachteten Beispiel der Temperatur des zugeführten Gases entspricht. Es ergibt sich somit eine Höhe H₁, welche das Schüttgut bei Zufuhr eines Wärmestroms *Q̇*₁ innerhalb eines Temperaturbereichs zwischen ϑₘᵢₙ und ϑₘₐₓ zurücklegt. Die Verweilzeit des Schüttguts t_{V} bei einer Temperatur innerhalb des Solltemperaturbereichs kann nun auf einfache Weise berechnet werden, indem die ermittelte Strecke H mit der Querschnittsfläche A des Behälters multipliziert und durch den der Vorrichtung entnommenen Volumenstrom V̇_{P,aus} geteilt wird.

Die Erfindung ermöglicht es also auf einfache Weise, die Verweilzeit des den Behälter 2 durchströmenden Schüttguts innerhalb von einem vorgebbaren Solltemperaturbereich zu ermitteln.

Bleibt der entnommene Volumenstrom V̇_{P,aus} konstant und ändert sich jedoch der dem Schüttgut zugeführte Wärmestrom *Q̇*, verringert sich die Verweilzeit t_{V} innerhalb des vorgegebenen Solltemperaturbereichs. Dieser Fall ist anhand der gepunktet dargestellten Trocknungsverlaufskurve im Diagramm für den Wärmestrom *Q̇*₂ dargestellt.

Analog zum oben beschriebenen Vorgehen erhält man im Beispiel für den Wärmestrom *Q̇*₂ die vom Schüttgut innerhalb des Solltemperaturbereichs (ϑₘₐₓ; ϑₘᵢₙ) zurückgelegte Strecke H₂. Weil bei dem kleineren Wärmestrom Q̇₂ die Temperaturabnahme innerhalb des durchströmten Schüttguts bereits bei geringeren Höhen h weiter fortgeschritten ist, also bei geringeren Höhen niedrigere Temperaturen herrschen als im Fall des größeren Wärmestroms Q̇₁, wird die Temperatur ϑₘᵢₙ bei einer kleineren Höhe h erreicht als im Fall des größeren Wärmestroms, und entsprechend ist die zurückgelegte Strecke innerhalb des Solltemperaturbereichs H₂ kleiner als im Fall des größeren Wärmestrom Q̇₁.

Bei konstantem entnommen Volumenstrom V̇_{P,aus} ergibt sich damit eine geringere Verweilzeit t_{V} innerhalb des Solltemperaturbereichs.

Durch Festlegen geeigneter Werte für den Solltemperaturbereich sowie für die Verweilzeit T_{V} des Schüttguts bei einer Temperatur innerhalb des gewählten Solltemperaturbereichs kann auf der Basis von Vorversuchen für das jeweils zu trocknende Produkt ein geeigneter Satz von Randbedingungen festgelegt werden, bei deren Einhaltung die Trocknung zuverlässig in der gewünschten Weise erfolgt.

Aufgrund der Verteilung der Temperatur sowie der Beladung des Schüttgutes mit Feuchte innerhalb des Behälters sowohl in vertikaler als auch in horizontaler Richtung ist diese Vorgehensweise besonders zuverlässig, weil durch die empirische Ermittlung der für den jeweiligen Fall passenden Randdaten der gewünschten Verweilzeit im Solltemperaturbereich derartige lokale Abweichungen von an bestimmten Positionen gemessenen Werten für den Gesamtprozess nahezu keine Rolle spielen.

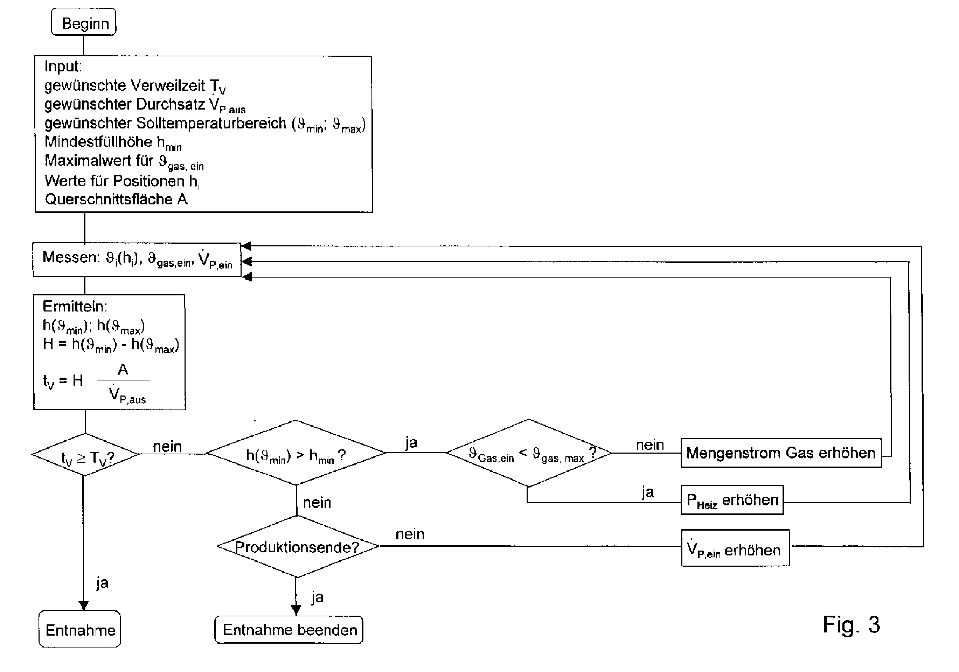

In Figur 3 sind die Grundzüge des erfindungsgemäßen Verfahrens gemäß einer ersten Möglichkeit anhand eines schematischen Flussdiagramms gezeigt. Zu Beginn können Werte für festzulegende Parameter eingegeben werden. Beispielsweise können die gewünschte Verweilzeit T_{V}, der gewünschte Durchsatz V̇_{P,aus} sowie der gewünschte Solltemperaturbereich (ϑₘᵢₙ, ϑₘₐₓ) sein. Des Weiteren können Werte für die Mindestfüllhöhe hₘᵢₙ, ein Maximalwert für die Temperatur des zugeführten Gases ϑ_{Gas,ein} sowie Werte für die Positionen hᵢ und die Querschnittsfläche A des Behälters 2 eingegeben werden.

Im Betrieb werden an den Positionen hi die Temperaturen ϑi (hi) sowie die Temperatur des zugeführten Gases ϑ_{Gas,ein} und der dem Behälter zugeführte Volumenstrom an Schüttgut V̇_{P,ein} gemessen. Aus diesen Daten werden die zu den Grenzen des Solltemperaturbereichs gehörenden Werte für die vertikalen Positionen h(ϑₘᵢₙ) sowie h(ϑₘₐₓ) ermittelt. Daraus wird die vom Schüttgut innerhalb des Solltemperaturbereichs zurückgelegte Strecke H = h(ϑₘᵢₙ) - h(ϑₘₐₓ) ermittelt. Daraus kann die Verweilzeit t_{V} des Schüttguts bei einer Temperatur im Solltemperaturbereich berechnet werden. In einem nächsten Schritt wird überprüft, ob die Verweilzeit t_{V} innerhalb des Solltemperaturbereichs größer oder gleich der vorgegebenen gewünschten Verweilzeit T_{V} ist. Ist dies der Fall, kann das Schüttgut entnommen werden.

Ist dies nicht der Fall, wird in einem nächsten Abfrageschritt überprüft, ob die Position h(ϑₘᵢₙ) größer ist als die Mindestfüllhöhe hₘᵢₙ. Mit dieser Abfrage wird sichergestellt, dass kein unbeabsichtigtes Entleeren des Behälters unter die Mindestfüllhöhe hₘᵢₙ erfolgt.

Ist die Position h(ϑₘᵢₙ), an welcher die untere Grenze des Solltemperaturbereichs erreicht ist, kleiner als die Mindestfüllhöhe hₘᵢₙ, wird deswegen in einem nächsten Abfrageschritt überprüft, ob ein Produktionsende erwünscht ist. Ist dies der Fall, wird die Entnahme beendet. Ist dies nicht der Fall, wird ein Stellsignal in der Steuereinrichtung 7 generiert, welches die Information enthält, den der Vorrichtung zugeführten Volumenstrom an Schüttgut V̇_{P,ein} zu erhöhen.

Ist dies erfolgt, werden erneut Messwerte ϑᵢ(hᵢ), ϑ_{Gas,ein} und V̇_{P,ein} aufgenommen und wie oben beschrieben die weiteren zur Steuerung herangezogenen Größen ermittelt und das Verfahren fortgesetzt.

Ist die vertikale Position h(ϑₘᵢₙ) größer als die Mindestfüllhöhe, wird in einem nächsten Schritt überprüft, ob der gemessene Wert für die Eintrittstemperatur des Gases ϑ_{Gas,ein} unterhalb des zulässigen Maximalwertes ϑ_{Gas,max} liegt. Ist dies der Fall, kann die Heizleistung erhöht werden. Dazu wird veranlasst, dass ein Stellsignal mit der Information, die Heizleistung zu erhöhen, von der Steuereinrichtung ausgegeben wird. Im Anschluss daran werden wiederum Messwerte in oben beschriebener Weise aufgenommen und aus ihnen die für die Steuerung heranzuziehenden Größen ermittelt und das Verfahren fortgesetzt.

Ist die Eintrittstemperatur ϑ_{Gas,ein} des zuzuführenden Gases nicht kleiner als die maximal zulässige Eintrittstemperatur ϑ_{Gas,max} ist ein Erhöhen der Heizleistung aus Sicherheitsgründen nicht möglich. Um den dem Schüttgut zugeführten Wärmestrom zu erhöhen, ist es daher in diesem Fall erforderlich, den Mengenstrom an zugeführtem Gas zu erhöhen. In diesem Fall wird daher veranlasst, dass die Steuereinrichtung ein Signal mit der Information generiert, den Mengenstrom an zuzuführendem Gas zu erhöhen. Dann werden wiederum, wie oben beschrieben, Messwerte aufgenommen und aus ihnen die erforderlichen Größen zum Betrieb der Vorrichtung beziehungsweise zur Durchführung des Verfahrens ermittelt.

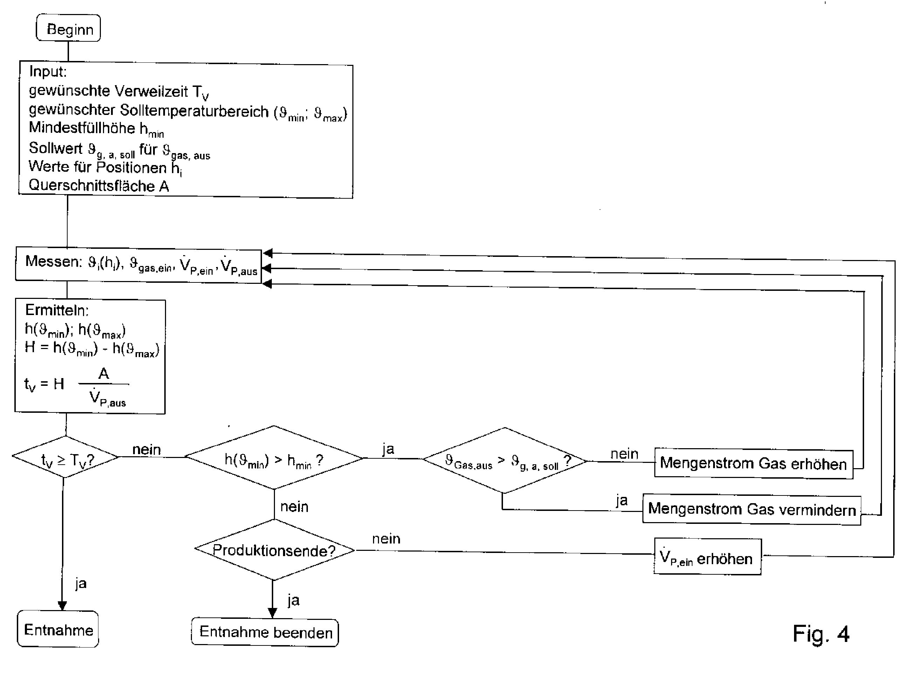

In Figur 4 sind die Grundzüge des erfindungsgemäßen Verfahrens gemäß einer zweiten Möglichkeit anhand eines schematischen Flussdiagramms gezeigt. Zu Beginn können Werte für festzulegende Parameter eingegeben werden. Im Unterschied zur oben beschriebenen ersten Möglichkeit zur Umsetzung des erfindungsgemäßen Verfahrens wird hier zum einen neben der gewünschten Verweilzeit T_{V}, dem gewünschten Solltemperaturbereich (ϑₘᵢₙ, ϑₘₐₓ), einem Wert für die Mindestfüllhöhe hₘᵢₙ, Werten für die Positionen hᵢ und der Querschnittsfläche A des Behälters 2 kein Wert für den gewünschten Durchsatz vorgegeben. Zum anderen wird ein Sollwert ϑ_{g,a,soll} für die Temperatur des aus dem Behälter austretenden Gases ϑ_{gas, aus} vorgegeben.

Im Betrieb werden wie gemäß der oben beschriebenen ersten Möglichkeit an den Positionen hᵢ die Temperaturen ϑᵢ(hᵢ) sowie die Temperatur des zugeführten Gases ϑ_{Gas,ein} und der dem Behälter zugeführte Volumenstrom an Schüttgut V̇_{P,ein} gemessen. Zusätzlich wird auch der dem Behälter entnommene Volumenstrom an getrocknetem Schüttgut gemessen. Damit kann das Verfahren auf Änderungen des Durchsatzes während des Betriebs reagieren und die Parameter entsprechend steuern, so daß auch bei sich änderndem Durchsatz die Trocknung gemäß den Anforderungen an das Produkt zuverlässig durchgeführt wird. Diese Art der Durchführung des Verfahrens ist insbesondere auch bei zu befürchtenden Schwankungen des Durchsatzes von Vorteil.

Die Ermittlung der Verweilzeit t_{V} des Schüttguts bei einer Temperatur im Solltemperaturbereich wird in der oben beschriebenen Weise durchgeführt. Wenn die Verweilzeit t_{V} innerhalb des Solltemperaturbereichs größer als oder gleich wie die vorgegebene gewünschte Verweilzeit T_{V} ist, kann das Schüttgut entnommen werden.

Die Abfrage, ob die Position h(ϑₘᵢₙ) größer ist als die Mindestfüllhöhe hₘᵢₙ ist sowie die Überprüfung, ob ein Produktionsende erwünscht ist, und die entsprechende Fortsetzung beziehungsweise Beendigung des Verfahrens entsprechen der oben beschriebenen Vorgehensweise.

Gegenüber der oben beschriebenen Durchführung des Verfahrens wird nun eine andere Art der Steuerung der Wärmemenge, welche dem Behälter zugeführt wird, vorgenommen.

Es wird in einem nächsten Schritt überprüft, ob der gemessene Wert für die Austrittstemperatur des Gases ϑ_{Gas,aus} kleiner als oder gleich wie der vorgegebene Sollwert ϑ_{g,a,soll} ist. Solange dieser Sollwert nicht überschritten wird, kann der Mengenstrom an Gas erhöht werden. Dazu wird veranlasst, dass ein Stellsignal mit der Information, den Mengenstrom an Gas zu erhöhen, von der Steuereinrichtung ausgegeben und an die Einrichtung zum Einstellen des Mengenstroms an dem Behälter zuzuführendem Gas weitergegeben wird. Im Anschluss daran werden wiederum Messwerte in oben beschriebener Weise aufgenommen und aus ihnen die für die Steuerung heranzuziehenden Größen ermittelt und das Verfahren fortgesetzt.

Ist der gemessene Wert für die Austrittstemperatur des Gases ϑ_{Gas,aus} größer als der vorgegebene Sollwert ϑ_{g,a,soll}, wird der Mengenstrom an zugeführtem Gas vermindert und somit thermische Energie eingespart werden. In diesem Fall wird daher veranlasst, dass die Steuereinrichtung ein Signal mit der Information generiert, den Mengenstrom an zuzuführendem Gas zu vermindern. Dann werden wiederum, wie oben beschrieben, Messwerte aufgenommen und aus ihnen die erforderlichen Größen zum Betrieb der Vorrichtung beziehungsweise zur Durchführung des Verfahrens ermittelt.

Die Möglichkeit, die Steuerung des der Vorrichtung zuzuführenden Mengenstroms an Gas in Abhängigkeit von der Austrittstemperatur des Gases durchzuführen, ist selbstverständlich nicht daran gekoppelt, den Durchsatz zu messen. Die Bestimmung des Durchsatzes durch Messung kann im Rahmen der ersten beschriebenen Möglichkeit ebenso, insbesondere ohne weitere Änderungen des Verfahrens, durchgeführt werden. Genauso kann die Steuerung des der Vorrichtung zuzuführenden Mengenstroms an Gas in Abhängigkeit von der Austrittstemperatur des Gases im Rahmen der ersten beschriebenen Möglichkeit durchgeführt werden, wobei der Durchsatz durch Vorgeben eines gewünschten Wertes bestimmt wird.

## Patentansprüche

1. Vorrichtung zum, insbesondere kontinuierlichen, Trocknen von Schüttgut, insbesondere Kunststoffgranulat, in einem Behälter sowie zur, insbesondere kontinuierlichen, Entnahme von getrocknetem Schüttgut aus dem Behälter, mit
einer Einrichtung zum Zuführen von feuchtem Schüttgut,
einer Einrichtung zum Abführen von Schüttgut,
einer Einrichtung zum Zuführen von erwärmtem Gas zu dem Behälter und einer Einrichtung zum Abführen von Gas aus dem Behälter, so daß das Gas das Schüttgut durchströmt, wenigstens zwei in unterschiedlichen vertikalen Positionen (hᵢ) im Behälter angebrachten Temperaturfühlern, sowie
mit einer Steuereinrichtung,
**dadurch gekennzeichnet, daß**
die Steuereinrichtung derart ausgebildet ist, daß sie in Abhängigkeit von
die örtlich erfaßten Temperaturen repräsentierenden Signalen (ϑᵢ; hᵢ) der Temperaturfühler,
einer vorgebbaren Verweilzeit (T_{V}) des Schüttgutes bei einer Temperatur innerhalb eines vorgebbaren Solltemperaturbereichs (ϑₘᵢₙ, ϑₘₐₓ) und
einem bestimmbaren Durchsatz an getrocknetem Schüttgut die dem Schüttgut zugeführte Wärmemenge derart steuert, daß das entnommene Schüttgut mindestens während der Verweilzeit (T_{V}) eine Temperatur innerhalb des Solltemperaturbereichs (ϑₘᵢₙ, ϑₘₐₓ) besaß.

2. Vorrichtung nach Anspruch 1, **gekennzeichnet durch** eine Einrichtung zum Vorgeben und/oder Messen des Durchsatzes an getrocknetem Schüttgut.

3. Vorrichtung nach einem der vorangegangenen Ansprüche, **gekennzeichnet durch** eine Einrichtung zum Messen, zum Regeln oder Steuern des zugeführten Mengenstroms von feuchtem Schüttgut.

4. Vorrichtung nach einem der vorangegangenen Ansprüche, **gekennzeichnet durch** eine Einrichtung zum Regeln oder Steuern des abgeführten Mengenstroms von getrocknetem Schüttgut.

5. Vorrichtung nach einem der vorangegangenen Ansprüche, **gekennzeichnet durch** eine Einrichtung zum Messen, zum Regeln oder Steuern des zugeführten Mengenstroms von erwärmtem Gas.

6. Vorrichtung nach einem der vorangegangenen Ansprüche **gekennzeichnet durch** eine Einrichtung zum Beheizen des zuzuführenden Gases.

7. Vorrichtung nach einem der vorangegangenen Ansprüche **gekennzeichnet durch** eine Einrichtung zum Messen oder zum Regeln oder Steuern der Temperatur des zugeführten erwärmtem Gases (ϑ_{Gas,ein}).

8. Verfahren zum, insbesondere kontinuierlichen, Bereitstellen von getrocknetem Schüttgut, mit den Schritten
a) Anordnen von zumindest zwei Temperaturmeßsonden an unterschiedlichen vertikalen Positionen (hᵢ) in einem Behälter,
b) Bereitstellen von Werten (hᵢ) für die Positionen der Temperaturmeßsonden,
c) Bereitstellen eines Wertes für die vom Schüttgut durchströmte Querschnittsfläche (A) im Behälter,
d) Vorgeben eines Solltemperaturbereichs (ϑₘᵢₙ, ϑₘₐₓ),
e) Vorgeben eines Wertes für die Verweilzeit (T_{V}) des Schüttgutes bei einer Temperatur innerhalb eines vorgebbaren Solltemperaturbereichs (ϑₘᵢₙ, ϑₘₐₓ),
f) Bestimmen eines Wertes für den Volumenstrom an zu entnehmendem getrockneten Schüttgut,
g) Zuführen von Schüttgut in den Behälter,
h) Zuführen von erwärmtem Gas in und Abführen von Gas aus dem Behälter derart, daß das Gas das Schüttgut durchströmt,
i) Messen der Temperatur in Abhängigkeit von der Höhe im Schüttgut an jeder Position (ϑᵢ(hᵢ)),
j) Ermitteln der Position (h(ϑₘᵢₙ)), an welcher die Temperaturuntergrenze des Solltemperaturbereichs (ϑₘᵢₙ) vorliegt,
k) Ermitteln der Position (h(ϑₘₐₓ)), an welcher die Temperaturobergrenze des Solltemperaturbereichs (ϑₘₐₓ) vorliegt,
l) Ermitteln der vertikalen Distanz (H) zwischen den in den Schritten j) und k) ermittelten Positionen (h(ϑₘᵢₙ), h(ϑₘₐₓ)),
m) Ermitteln der Verweilzeit (t_{V}) im Solltemperaturbereich (ϑₘᵢₙ, ϑₘₐₓ),
n) Überprüfen, ob die Verweilzeit (t_{V}) gleich oder größer als die vorgegebenen Verweilzeit (T_{V}) ist,
o) Entnehmen von Schüttgut mit vorgegebenem Volumenstrom, wenn die Verweilzeit (t_{V}) größer als die oder gleich der vorgegebenen Verweilzeit (T_{V}) ist.

9. Verfahren nach Anspruch 8, **dadurch gekennzeichnet, daß** zum Bestimmen eines Wertes für den Volumenstrom an zu entnehmendem getrockneten Schüttgut der Volumenstrom an zu entnehmendem getrockneten Schüttgut gemessen oder vorgegeben wird.

10. Verfahren nach einem der vorangegangenen Ansprüche, **dadurch gekennzeichnet, daß** eine Mindestfüllhöhe (hₘᵢₙ) vorgegeben wird.

11. Verfahren nach einem der vorangegangenen Ansprüche, **dadurch gekennzeichnet, daß** dann, wenn die Verweilzeit (t_{V}) kleiner als der vorgegebenen Verweilzeit (T_{V}) ist, überprüft wird, ob die Position, an welcher die Temperaturuntergrenze des Solltemperaturbereichs vorliegt (h(ϑₘᵢₙ)), größer als die Mindestfüllhöhe (hₘᵢₙ) ist.

12. Verfahren nach Anspruch 11, **dadurch gekennzeichnet, daß** dann, wenn die Position, an welcher die Temperaturuntergrenze des Solltemperaturbereichs vorliegt (h(ϑₘᵢₙ)), kleiner als die Mindestfüllhöhe (hₘᵢₙ) ist, überprüft wird, ob die Produktion beendet werden soll und, wenn ja, die Entnahme von Schüttgut beendet wird.

13. Verfahren nach Anspruch 12, **dadurch gekennzeichnet, daß** dann, wenn die Produktion nicht beendet werden soll, der Volumenstrom des in den Behälter zugeführten Schüttgutes erhöht wird und das Verfahren nach Anspruch 8 bei Schritt i) fortgesetzt wird.

14. Verfahren nach einem der Ansprüche 13 bis 19, **dadurch gekennzeichnet, daß** ein maximal zulässiger Wert für die Temperatur (ϑ_{Gas,max}) des zugeführten erwärmten Gases vorgegeben wird.

15. Verfahren nach einem der Ansprüche 8 bis 14, **dadurch gekennzeichnet, daß** die Temperatur (ϑ_{Gas,ein}) des zugeführten erwärmten Gases gemessen wird.

16. Verfahren nach Anspruch 15, **dadurch gekennzeichnet, daß** dann, wenn die Position, an welcher die Temperaturuntergrenze des Solltemperaturbereichs vorliegt (h(ϑₘᵢₙ)), größer als die Mindestfüllhöhe ist, überprüft wird, ob die Temperatur (ϑ_{Gas,ein}) des zugeführten erwärmten Gases kleiner ist als der maximal zulässige Wert für die Temperatur (ϑ_{Gas,max}) des zugeführten erwärmten Gases.

17. Verfahren nach Anspruch 16, **dadurch gekennzeichnet, daß** dann, wenn die Temperatur (ϑ_{Gas,ein}) des zugeführten erwärmten Gases kleiner ist als der maximal zulässige Wert für die Temperatur (ϑ_{Gas,max}) des zugeführten erwärmten Gases, das zugeführte erwärmte Gas auf eine höhere Temperatur erwärmt und das Verfahren nach Anspruch 8 bei Schritt i) fortgesetzt wird.

18. Verfahren nach Anspruch 16, **dadurch gekennzeichnet, daß** dann, wenn die Temperatur (ϑ_{Gas,ein}) des zugeführten erwärmten Gases größer als der oder gleich dem maximal zulässigen Wert für die Temperatur (ϑ_{Gas,max}) des zugeführten erwärmten Gases ist, der Mengenstrom des zugeführten erwärmten Gases erhöht und das Verfahren nach Anspruch 8 bei Schritt i) fortgesetzt wird.
